# EUROPÄISCHE PATENTSCHRIFT

(11) **EP 1 257 414 B1**
(45) Veröffentlichungstag und Bekanntmachung des Hinweises auf die Patenterteilung: **12.12.2007**
(21) Anmeldenummer: 00972862.7
(22) Anmeldetag: 25.10.2000
(51) Int. Cl.: B32B 15/01, B01J 35/02, C22C 38/18, C21D 8/02, H05B 3/00

(54) **VERWENDUNG EINER FORMSTABILEN EISEN-CHROM-ALUMINIUM-FOLIE**
USE OF A DIMENSIONALLY STABLE IRON-CHROME-ALUMINUM FILM
UTILISATION D'UNE FEUILLE DE FER-CHROME-ALUMINIUM INDEFORMABLE

(30) Priorität: 25.01.2000 DE 10002933
(43) Veröffentlichungstag der Anmeldung: 20.11.2002
(73) Patentinhaber: ThyssenKrupp VDM GmbH, 58791 Werdohl (DE)
(72) Erfinder: HOJDA, Ralf, 58762 Balve (DE); HATTENDORF, Heike, 58791 Werdohl (DE); KOLB-TELIEPS, Angelika, 58511 Lüdenscheid (DE); ESPENHAHN, Harald, 46240 Bottrop (DE)
(86) Internationale Anmeldenummer: PCT/EP2000/010495
(87) Internationale Veröffentlichungsnummer: WO 2001/054899

(56) Entgegenhaltungen:
- EP-A- 0 243 702
- EP-A- 0 861 916
- WO-A-01/00896
- DE-C- 19 642 497
- DE-C- 19 743 720

## Beschreibung

Die Erfindung betrifft ein Verfahren zur Herstellung einer formstabilen Eisen-Chrom-Aluminium-Folie.

Nach dem bekannten Stand der Technik werden Eisen-Chrom-Aluminium-Legierungen für die Herstellung von Folien verwendet, welche zu Formkörpern verarbeitet werden, die dann beispielsweise als Trägerkörper für Kraftfahrzeugabgaskatalysatoren oder als Heizelemente für Kochplatten Verwendung finden.

Durch die US-A 4,414,023 ist ein Stahl mit (in Masse-%) 8,0 bis 25,0 % Cr, 3,0 bis 8,0 % Al, 0,002 bis 0,06 % Seltenerdmetallen, max. 4,0 % Si, 0,06 bis 1,0 % Mn, 0,035 bis 0,07 % Ti, 0,035 bis 0,07 % Zr einschließlich unvermeidbarer Verunreinigungen bekannt geworden.

Der EP-A 0 387 670 ist eine Legierung mit (in Masse-%) 20 bis 25 % Cr, 5 bis 8 % Al, max. 0,01 P, max. 0,01 % Mg, max. 0,5 % Mn, max. 0,005 % S, Rest Fe einschließlich unvermeidbarer Verunreinigungen, max. 0,03 % Y, 0,004 % N, 0,02 bis 0,04 % C, 0,035 bis 0,07 % Ti und 0,035 bis 0,07 % Zr zu entnehmen.

Beide Druckschriften gehen von traditionellen Herstellungsverfahren, nämlich dem konventionellen Gießen der Legierung und dem anschließenden Warm- und Kaltverformen aus. Da diese Verfahren mit hohen Ausfällen verbunden sind, wurden in den letzten Jahren Alternativen entwickelt, bei welchen ein Chrom-Stahl, der reaktive Elemente enthält, mit Aluminium oder auch Aluminium-Legierungen beschichtet wird. Derartige Verbundwerkstoffe werden dann an Enddicke gewalzt und anschließend diffusionsgeglüht, wobei bei Einstellung geeigneter Glühparameter ein homogener Werkstoff entsteht.

Ein derartiges Verfahren ist beispielsweise durch die US-A 5,366,139 bekannt geworden, welche eine Metallfolie für Abgaskatalysatoren und ihre Herstellung beinhaltet. Ein ferritischer Edelstahl wird durch Walzplattieren beidseitig mit Aluminium beschichtet, ohne Wärmebehandlung an Enddicke gewalzt und anschließend einer Wärmebehandlung unterzogen, mit dem Ziel, ein gleichförmiges Material hoher Oxidationsbeständigkeit zu erzeugen.

Ein ähnliches Verfahren stellt die US-A 4,046,304 vor. Noch kostengünstiger ist es, das Walzplattieren durch Feueraluminieren zu ersetzen, was den zusätzlichen Vorteil bietet, dass die Beschichtung aus einer Aluminium-Silizium-Legierung bestehen kann, wobei das Silizium oft Vorteile für die Diffusionsglühung bietet und den spezifischen elektrischen Widerstand des Materials erhöht, was für bestimmte Anwendungen, beispielsweise den Vorkatalysator, wünschenswert ist.

In der DE-A 196 42 497 wird ein Verfahren zur Herstellung einer Eisen-Chrom-Aluminium-Folie sowie deren Verwendung beschrieben, wobei von einem kaltgewalzten und weichgeglühten Stahlband als Trägermaterial ausgegangen wird, das aus Eisen mit Zusätzen von 16 - 25 Gew.-% Cr und 0,01 - 0,1 Gew.-% Seltenen Erden oder Y oder Zr sowie den üblichen verfahrensbedingten Verunreinigungen besteht. Das 0,5 - 2,5 mm dicke Stahlband wird durch einseitige Beschichtung mit einer 0,08 - 0,5 mm dicken Aluminiumschicht versehen. Anschließend wird das so beschichtete Band bis zu einer Dicke zwischen 30 und 150 µm kalt ausgewalzt. Schließlich wird das beschichtete Band einer homogenisierenden Diffusionsglühung im Temperaturbereich 700 - 1000°C unterworfen. Der maximal mögliche Al-Gehalt wird in dieser Druckschrift mit 6 % angegeben.

Ein derartiges Verfahren ist beispielsweise in der DE 197 43 720 beschrieben worden. Hier wird ein Eisen-Chrom-Trägerband durch Feueraluminierung mit einer Al-Si-Legierung erzeugt, wobei der Gesamtaluminiumgehalt der beschichteten Metallfolie an der Oberfläche bei mindestens 7 % liegt und zum Innern hin nicht unter 3 % abfällt. Die Folie soll hierbei folgende Zusammensetzung (in Masse-%) aufweisen: 18 - 25 % Cr, 4 - 10 % Al, 0,03 - 0,08 % Y, max. 0,01 % Ti, 0,01 - 0,05 % Zr, 0,01 - 0,05 % Hf, 0,5-1,5 % Si. Zunächst wird ein Formkörper erzeugt, der anschließend einer Diffusionsglühung bei etwa 1100°C unterzogen wird. Die Metallfolie soll bevorzugt für Heizleiterwiderstände und Träger für Abgaskatalysatoren einsetzbar sein. Hier sind zwar bereits Al-Gehalte > 6 % denkbar, wobei die Art der Herstellung dennoch nicht das gewünschte Schrumpfverhalten mit sich bringt, demzufolge mit hohen Ausschüssen zu rechnen ist.

Bieten die genannten Verfahren Kostenvorteile gegenüber dem konventionellen Herstellungsweg, so hat es sich jedoch gezeigt, dass die Endprodukte bei der Diffusionsglühung bis zu 1 % in Länge und/oder Breite schrumpfen, was sich bei der Herstellung sowohl eines Heizleiterelementes als auch eines Katalysatorträgers negativ auswirkt.

Bei den genannten Anwendungen wird die Folie zu einem Element verarbeitet und die Enden werden befestigt, wie es zum Beispiel in der DE-A 195 30 850 beschrieben ist. Bei dem anschließenden Diffusionsglühen würde ein übermäßiges Schrumpfen zu Fehlern an den Befestigungspunkten, d.h. Abrissen, führen.

Dieser Effekt kann nun dadurch umgangen werden, dass das Band im Gegensatz zu dem in der US-A 5,366,139 beschriebenen Weg, wie in der DE-A 197 43 720 dargestellt, während des Kaltwalzens an Enddicke zwischengeglüht wird, wodurch der Diffusionsprozess teilweise oder komplett vorweggenommen wird und Spannungen im Verbund abgebaut werden. Nachteilig sind dabei die hohen Kosten dieser eigentlich unerwünschten Wärmebehandlung und das Risiko der Entstehung einer Oxidschicht an den Oberflächen, welche für das Endprodukt zwar erwünscht ist, das Kaftwalzen jedoch behindert und die Walzen verschmutzt.

Durch die EP-B 0 640 390 ist ein Verfahren zur Herstellung eines Foliensubstratmaterials bekannt geworden, das folgende Schritte umfaßt:

Es wird eine Schicht eines ersten Materials, welches aus einer chromhaltigen Eisenlegierung und Aluminium und Aluminiumlegierungen besteht, zwischen zwei Schichten eines zweiten Materials eingebunden. Letzteres wird aus dem Bereich der chromhaltigen Eisenlegierungen und Aluminium und Aluminiumlegierungen ausgewählt, unterscheidet sich aber von dem ersten Material. Die drei Lagen werden über eine Reduzierung der Dicke des Verbundes metallurgisch miteinander verbunden. Bei der gewünschten Enddicke wird das Material in situ bei einer Temperatur zwischen 900°C und 1200°C innerhalb einer ausreichenden Zeitspanne geglüht, um eine Diffusion der verschiedenen Bestandteile der beschriebenen Schichten zu ermöglichen und eine gleichförmige Mischkristall-Legierung als Foliensubstrat zur Verfügung zu stellen.

Der Erfindung liegt die Aufgabe zugrunde, ein Verfahren zur Verfügung zu stellen, mit dem sich bewährte Legierungen, wie sie beispielsweise in der DE-A 197 43 720 beschrieben sind, kostengünstig herstellen lassen, ohne daß ein Schrumpfen in Länge und/oder Breite während der Diffusionsglühung der Anwendung für empfindliche Bauteile im Weg steht. Darüber hinaus ist der Entwicklung Rechnung zu tragen, dass die Anforderungen an den Umweltschutz steigen und damit eine Weiterentwicklung dieser Legierungen für derartige Bauteile erfordern. Diese besteht unter anderem darin, dass die Foliendicke abnimmt und die Oxidationsbeständigkeit nur durch die Erhöhung des Aluminiumgehaltes auf mehr als (in Masse-%) 6 % sichergestellt werden kann.

Diese Aufgabe wird gelöst durch ein Verfahren zur Herstellung einer formstabilen Eisen-Chrom-Aluminium-Folie gemäß Anspruch 1.

Diese Aufgabe wird auch gelöst durch ein Verfahren zur Herstellung einer formstabilen Eisen-Chrom-Aluminium-Folie, gemäß Anspruch 2.

Vorteilhafte Weiterbildungen der Erfindungsgegenstände sind den zugehörigen Unteransprüchen zu entnehmen.

Bevorzugte Anwendungsgebiete zum Einsatz der nach den erfindungsgemäßen Verfahren hergestellten Eisen-Chrom-Aluminium-Folien sind
- Trägerelemente für Katalysatoren, insbesondere für Abgaskatalysatoren
- Widerstandswerkstoffe oder Heizleiter.

Durch die Begrenzung des Aluminiumgehaltes des Trägerbandes auf max. 6 % wird die Herstellung auf konventionellem Wege nicht beeinträchtigt. So kann ein 0,5 bis 2,5 mm dickes Band aus (in Masse-%) 16 bis 25 % Cr, 2 bis 6 % Al, 0,1 bis 3% Si, max. 0,5 Mn, 0,01 bis 0,3 % Zirkon oder 0,01 - 0,1 Masse-% Seltenerdmetallen und/oder Yttrium, Hafnium, Titan, max. 0,01 Mg, max. 0,1 % Ca, Rest im wesentlichen Eisen einschließlich verfahrensbedingter Beimengungen, entweder durch Blockguss kostengünstiger, aber noch günstiger durch Strangguss, sowie anschließendes Warm- und Kaltwalzen hergestellt werden.

Anfänglich befürchtete Fertigungsausfälle treten nicht auf. Ein weiterer Vorteil, der sich durch diesen Aluminiumgehalt des Grundmateriales bietet, ist der, dass auch dünnere Beschichtungen zur Sicherstellung der Oxidationsbeständigkeit ausreichen. Dies ist beispielsweise für den Prozess des Feueraluminierens oder Plattierens wesentlich, bei welchem die Schichtdicke verfahrensbedingt begrenzt ist, wenn zusätzlich noch eine gleichmäßige Schichtdicke gefordert wird. Enthält das Grundmaterial jedoch schon Aluminium, können auch durch Feueraluminieren ohne weiteres Aluminiumgehalte von über 7 % am Endprodukt eingestellt werden. Das Trägerband muss zur Erzielung eines Gesamtmassegehaltes von beispielsweise 6 % jetzt nur noch mit 3 % Aluminium beschichtet werden, da der Chrom-Stahl bereits 3 % Aluminium mitbringt. Nach dem Beschichten wird der Verbund an Enddicke bis zu 20 µm kaltgewalzt und zu einem Katalysatorträger, einem Widerstand oder einem Heizleiter verarbeitet. Die Homogenisierungsglühung erfolgt dann entweder an der Folie oder am Endprodukt. Das aluminiumhaltige Trägermaterial und die damit verbundene Schichtdicke auf den Oberflächen bewirkt überraschenderweise, dass der Verbund während der Diffusionsglühung um weniger als 0,5 % schrumpft und damit ausreichend formstabil ist.

Die Vorteile der Erfindung werden in den folgenden Beispielen näher erläutert:

### Beispiel 1 Blockguss feueraluminiert

Der Trägerwerkstoff hat die Zusammensetzung (Angaben in Masse%):

| Cr | Al | Si | Ni | Mn | Y | Hf | SE*) | Zr | Ti | Mg | Ca | Fe |
|---|---|---|---|---|---|---|---|---|---|---|---|---|
| 18,4 | 2,0 | 0,2 | 0,13 | 0,25 | 0,04 | 0,04 | <0,01 | <0,01 | <0,01 | 0,004 | <0,001 | Rest |

| | | | | | | | | | | | | |
|---|---|---|---|---|---|---|---|---|---|---|---|---|
| *) Seltene Erden | | | | | | | | | | | | |

Der Trägerwerkstoff wurde als Block abgegossen, warm zu Brammen und anschließend zu 3,5 mm dickem Warmband verarbeitet. Durch Kaltwalzen wurde er anschließend bis auf eine Dicke von 0,6 mm weiterverformt, weichgeglüht und sodann durch Feueraluminieren mit einer Auflage von 0,03 mm beschichtet. Das beschichtete Band wurde ohne weitere Wärmebehandlung zu einer 50 µm dünnen Folie gewalzt. Nach einer Homogenisierungsglühbehandlung bei 1100°C für 15 Minuten an Luft schrumpfte die Folie um etwa 0,2%, was die Verwendung als Katalysatorträger und Heizleiter nicht beeinträchtigt.

Das Oxidationsverhalten wurde nach einer Auslagerung bei 1100 °C untersucht. Nach 400 Stunden veränderte sich die Masse der Probe um 4,3%, was auf eine hohe Oxidationsbeständigkeit hinweist.

### Beispiel 2 Blockguss walzplattiert

Der Trägerwerkstoff hat die Zusammensetzung (Angaben in Masse%):

| Cr | Al | Si | Ni | Mn | Y | Hf | SE*) | Zr | Ti | Mg | Ca | Fe |
|---|---|---|---|---|---|---|---|---|---|---|---|---|
| 18,2 | 3,3 | 0,29 | 0,16 | 0,15 | 0,05 | 0,05 | <0,01 | <0,01 | <0,01 | 0,009 | 0,001 | Rest |

| | | | | | | | | | | | | |
|---|---|---|---|---|---|---|---|---|---|---|---|---|
| *) Seltene Erden | | | | | | | | | | | | |

Der Trägerwerkstoff wurde als Block abgegossen, warm zu Brammen und anschließend zu 3,5 mm dickem Warmband verarbeitet. Durch Kaltwalzen wurde er anschließend bis auf eine Dicke von 1,0 mm weiterverformt, weichgeglüht und sodann durch Walzplattieren mit einer Auflage von 0,06 mm beidseitig beschichtet. Das beschichtete Band wurde ohne weitere Wärmebehandlung zu einer 50 µm dünnen Folie gewalzt. Nach einer Homogenisierungsglühbehandlung bei 1100°C für 15 Minuten an Luft schrumpfte die Folie um etwa 0,4 %, was die Verwendung als Katalysatorträger und Heizleiter nicht beeinträchtigt.

Das Oxidationsverhalten wurde nach einer Auslagerung bei 1100°C untersucht. Nach 400 Stunden veränderte sich die Masse der Probe um 3,8 %, was auf eine hohe Oxidationsbeständigkeit hinweist.

### Beispiel 3 Strangguss feueraluminiert

Der Trägerwerkstoff hat die Zusammensetzung (Angaben in Masse-%):

| Cr | Al | Si | Ni | Mn | Y | Hf | SE*) | Zr | Ti | Mg | Ca | Fe |
|---|---|---|---|---|---|---|---|---|---|---|---|---|
| 17,3 | 2,8 | 0,53 | 0,13 | 0,29 | 0,03 | 0.05 | <0,01 | <0,01 | <0,01 | 0,004 | <0,001 | Rest |

| | | | | | | | | | | | | |
|---|---|---|---|---|---|---|---|---|---|---|---|---|
| *) Seltene Erden | | | | | | | | | | | | |

Der Trägerwerkstoff wurde im Strangguss abgegossen und anschließend zu 3,0 mm dickem Warmband verarbeitet. Durch Kaltwalzen wurde er anschließend bis auf eine Dicke von 0,60 mm weiterverformt, weichgeglüht und sodann durch Feueraluminieren mit einer Auflage 0,04 mm beschichtet.

Das beschichtete Band wurde ohne weitere Wärmebehandlung zu einer 50*µ*m dünnen Folie gewalzt. Nach einer Homogenisierungsglühbehandlung bei 1100°C für 15 Minuten im Vakuum schrumpfte die Folie um etwa 0,3 %, was die Verwendung als Katalysatorträger und Heizleiter nicht beeinträchtigt.

Das Oxidationsverhalten wurde nach einer Auslagerung bei 1100°C untersucht. Nach 400 Stunden veränderte sich die Masse der Probe um 3,6 %, was auf hohe Oxidationsbeständigkeit hinweist.

### Beispiel 4 Strangguss walzplattiert

Der Trägerwerkstoff hat die Zusammensetzung (Angaben in Masse%):

| Cr | Al | Si | Ni | Mn | Y | Hf | SE*) | Zr | Ti | Mg | Ca | Fe |
|---|---|---|---|---|---|---|---|---|---|---|---|---|
| 17,3 | 2,8 | 0,53 | 0,13 | 0,29 | 0,03 | 0,05 | <0,01 | <0,01 | <0,01 | 0,004 | <0,001 | Rest |

| | | | | | | | | | | | | |
|---|---|---|---|---|---|---|---|---|---|---|---|---|
| *) Seltene Erden | | | | | | | | | | | | |

Der Trägerwerkstoff wurde im Strangguss abgegossen und anschließend zu 3,0 mm dickem Warmband verarbeitet. Durch Kaltwalzen wurde er anschließend bis zu einer Dicke von 1,4 mm weiterverformt, weichgeglüht und sodann durch Walzplattieren einer Gesamtauflage von 0,05 mm beidseitig beschichtet.

Das beschichtete Band wurde ohne weitere Wärmebehandlung zu einer 50 µm dünnen Folie gewalzt. Nach einer Homogenisierungsglühbehandlung bei 1100°C für 15 Minuten im Vakuum schrumpfte die Folie um etwa 0,3 %, was die Verwendung als Katalysatorträger und Heizleiter nicht beeinträchtigt.

Das Oxidationsverhalten wurde nach einer Auslagerung bei 1100°C untersucht. Nach 400 Stunden veränderte sich die Masse der Probe um 3,9 %, was auf hohe Oxidationsbeständigkeit hinweist.

## Patentansprüche

1. Verfahren zur Herstellung eines formstabilen Eisen-Chrom-Aluminium-Folie, wobei ein Trägerband der Zusammensetzung (in Masse %)
| | |
|---|---|
| Cr | 16-25 % |
| Al | 2-6 % |
| Si | <0.5 % |
| Mn | max. 0.05 % |
| Zr | < 0.1 % |
| ΣY+Hf | < 0.3 % |
| sonstige SE | < 0.01 % |
| Ti | < 0.02 % |
| Mg | max. 0.01 % |
| Ca | max. 0.1 % |
| Σ Mg+Ca | < 0.03 % |
| Fe | Rest |
und den üblichen verfahrensbedingten Verunreinigungen, mit einer ein- oder beidseitigen Beschichtung aus Aluminium oder dessen Legierungen versehen wird, wobei die Gesamtbeschichtung in Bereich von 0,5 bis 5 % der Trägerbandmasse liegt und danach das beschichtete Band ohne weitere Wärmebehandlung einem Walzvorgang, bzw. weiteren Fertigungsschritten, und abschließend zur Erzielung eines Schrumpfs in Länge und/oder Breite <0,5 % einer Homogenisierungsglühung bei Temperaturen zwischen 600°C und 1200°C unter Wasserstoff oder einem Wasserstoff-Stickstoffgemisch mit einem Taupunkt <-40°C unterzogen wird.

2. Verfahren zur Herstellung eines formstabilen Eisen-Chrom-Aluminium-Folie, wobei ein Trägerband der Zusammensetzung (in Masse %)
| | |
|---|---|
| Cr | 16-25 % |
| Al | 2-6 % |
| Si | <0.5 % |
| Mn | max. 0.05 % |
| Zr | < 0.1 % |
| ΣY+Hf | < 0.3 % |
| sonstige SE | < 0,01 % |
| Ti | < 0,02 % |
| Mg | max. 0,01 % |
| Ca | max. 0,1 % |
| Σ Mg+Ca | < 0,03 % |
| Fe | Rest |
und den üblichen verfahrensbedingten Verunreinigungen, mit einer ein- oder beidseitigen Beschichtung aus Aluminium oder dessen Legierungen versehen wird, wobei die Gesamtbeschichtung in Bereich von 0,5 bis 5 % der Trägerbandmasse liegt und danach das beschichtete Band ohne weitere Wärmebehandlung einem Walzvorgang, bzw. weiteren Fertigungsschritten, und abschließend zur Erzielung eines Schrumpfs in Länge und/oder Breite <0,5 % einer Homogenisierungsglühung bei Temperaturen zwischen 600°C und 1200°C unter Wasserstoff oder einem Wasserstoff-Stickstoffgemisch mit einem Taupunkt <-40°C unterzogen wird.

3. Verfahren nach Anspruch 1 oder 2, **dadurch gekennzeichnet, dass** die beschichtung durch Feueraluminierung erfolgt.

4. Verfahren nach Anspruch 1 oder 2, **dadurch gekennzeichnet**, ass die beschichtung durch Walzplattieren erfolgt.

## Claims

1. A method for the production of a dimensionally stable iron-chrome-aluminium film, wherein a carrier strip of the composition (in % by mass)
| | |
|---|---|
| Cr | 16-25% |
| Al | 2-6 % |
| Si | < 0.5 % |
| Mn | max. 0.05% |
| Zr | < 0.1 % |
| ΣY+Hf | <0.3% |
| Other rare earths | < 0.01 % |
| Ti | < 0.02 % |
| Mg | max. 0.01 % |
| Ca | max. 0.1 % |
| Σ Mg+Ca | < 0.03% |
| Fe | rest |
and the usual method dependent impurities is provided with a coating of aluminium or alloys thereof on one or both sides, wherein the total coating is comprised within the range between 0.5 and 5 % of the carrier strip mass, and then the coated strip is submitted to a rolling operation or other manufacturing steps without any other thermal treatment and finally it is submitted to a homogenizing annealing at temperatures comprised between 600°C and 1200°C under vacuum and with a pressure of < 10⁻⁴ mbar for achieving a shrinkage of length and/or width of < 0.5 %.

2. A method for the production of a dimensionally stable iron-chrome-aluminium film, wherein a carrier strip of the composition (in % by mass)
| | |
|---|---|
| Cr | 16-25 % |
| Al | 2-6% |
| Si | < 0.5 % |
| Mn | max. 0.05% |
| Zr | < 0.1 % |
| ΣY+Hf | <0.3% |
| Other rare earths | < 0.01 % |
| Ti | < 0.02 % |
| Mg | max. 0.01 % |
| Ca | max. 0.1 % |
| ΣMg+Ca | <0.03% |
| Fe | rest |
and the usual method dependent impurities is provided with a coating of aluminium or alloys thereof on one or both sides, wherein the total coating is comprised within the range between 0.5 and 5 % of the carrier strip mass, and then the coated strip is submitted to a rolling operation or other manufacturing steps without any other thermal treatment and finally it is submitted to a homogenizing annealing at temperatures comprised between 600°C and 1200°C under hydrogen or a hydrogen-nitrogen mixture having a dew point of < - 40°C for achieving a shrinkage of length and/or width of < 0.5 %.

3. A method according to claim 1 or 2, **characterized in that** the coating is realized by fire aluminizing.

4. A method according to claim 1 or 2, **characterized in that** the coating is realised by roll-bonding.

## Revendications

1. Procédé de fabrication d'une feuille de fer-chrome-aluminium, indéformable, un feuillard porteur ayant la composition (en % en poids) de
| | |
|---|---|
| Cr | 16-25 % |
| Al | 2-6% |
| Si | <0,5% |
| Mn | max. 0,05 % |
| Zr | < 0,1 % |
| ΣY+Hf | <0,3% |
| d'autres terres rares | < 0,01 % |
| Ti | < 0,02 % |
| Mg | max. 0,01 % |
| Ca | max. 0,1 % |
| ΣMg + Ca | < 0,03 % |
| Fe | le reste |
et des impuretés usuelles dépendant du procédé étant muni d'un côté ou de deux côtés d'un revêtement en aluminium ou en ses alliages, le revêtement total étant compris dans la gamme de 0,5 à 5 % de la masse de feuillard porteur, et après le feuillard revêtu étant soumis à une étape de laminage ou à d'autres étapes de fabrication sans un autre traitement thermique et finalement à un recuit d'homogénéisation aux températures entre 600°C et 1200 °C dans le vide et avec une pression de < 10⁻⁴ mbar pour obtenir un retrait de longueur et/ou de largeur de < 0,5 %.

2. Procédé de fabrication d'une feuille de fer-chrome-aluminium indéformable, un feuillard porteur ayant la composition (en % en poids) de
| | |
|---|---|
| Cr | 16-25 % |
| Al | 2-6 % |
| Si | < 0,5 % |
| Mn | max. 0,05 % |
| Zr | < 0,1 % |
| ΣY+Hf | < 0,3 % |
| d'autres terres rares | < 0,01 % |
| Ti | < 0,02 % |
| Mg | max. 0,01 % |
| Ca | max. 0,1 % |
| Σ Mg + Ca | < 0,03 % |
| Fe | le reste |
et des impuretés usuelles dépendant du procédé étant muni d'un côté ou de deux côtés d'un revêtement en aluminium ou en ses alliages, le revêtement total étant compris dans la gamme de 0,5 à 5 % de la masse de feuillard porteur, et après le feuillard revêtu étant soumis à une étape de laminage ou à d'autres étapes de fabrication sans un autre traitement thermique et finalement à un recuit d'homogénéisation aux températures entre 600°C et 1200 °C dans l'hydrogène ou dans un mélange d'hydrogène et d'azote ayant un point de condensation de < -40°C pour obtenir un retrait de longueur et/ou de largeur de < 0,5 %.

3. Procédé selon la revendication 1 ou 2, **caractérisé en ce que** le revêtement est réalisé par aluminage à feu.

4. Procédé selon la revendication 1 ou 2, **caractérisé en ce que** le revêtement est réalisé par plaquage par laminage.
